# EUROPÄISCHE PATENTSCHRIFT

(11) **EP 2 650 398 B1**
(45) Veröffentlichungstag und Bekanntmachung des Hinweises auf die Patenterteilung: **01.04.2015**
(21) Anmeldenummer: 13153393.7
(22) Anmeldetag: 31.01.2013
(51) Int. Cl.: C23C 4/04, C23C 4/06, B22F 1/00, B22F 9/00, C22C 1/00, B22F 3/115, C22C 33/02, C23C 28/00, F16D 65/12

(54) **Spritzpulver mit einer superferritischen Eisenbasisverbindung, sowie ein Substrat, insbesondere Bremsscheibe mit einer thermischen Spritzschicht**
Spray powder with a superferritic iron base compound and a substrate, in particular brake disc with a thermal spray coating
Poudre mouillable avec liaison à base de fer super-ferritique, ainsi qu'un substrat, notamment un disque de frein avec une couche de diffusion thermique

(30) Priorität: 11.04.2012 EP 12163790
(43) Veröffentlichungstag der Anmeldung: 16.10.2013
(73) Patentinhaber: Sulzer Metco AG, 5610 Wohlen (CH)
(72) Erfinder: Ernst, Peter Dr., 8174 Stadel b. Niederglatt (CH); Barth, Alexander Dr., 5610 Wohlen (CH)
(74) Vertreter: Intellectual Property Services GmbH

(56) Entgegenhaltungen:
- WO-A1-97/03776
- US-A- 4 822 689
- US-A1- 2012 017 805

## Beschreibung

Die Erfindung betrifft ein Spritzpulver aus einer superferritischen Eisenbasisverbindung zum thermischen Beschichten eines Substrats, insbesondere zum thermischen Beschichten einer Bremsscheibe eines Fahrzeugs, sowie ein Substrat, insbesondere Bremsscheibe mit einer thermischen Spritzschicht umfassend eine superferritische Eisenbasisverbindung gemäss dem Oberbegriff der unabhängigen Ansprüche.

Durch thermisches Spritzen aufgebrachte Beschichtungen sind seit langem für eine Vielzahl von Anwendungen bekannt. So werden zum Beispiel Oberflächen von Öl geschmierten Zylinderlaufflächen in Fahrzeugmotoren bereits seit einiger Zeit unter anderem durch thermisches Plasmaspritzen beschichtet, wobei die Schicht vor allem den Reibungskoeffizienten, der zwischen Kolbenringen und Zylinderwand wirksam ist, deutlich reduziert, so dass der Verschleiss von Kolbenringen und Zylinder deutlich zurückgeführt wird, was zu einer Erhöhung der Laufleistung des Motors, einer Verlängerung der Wartungsintervalle, zum Beispiel beim Ölwechsel und nicht zuletzt zu einer merklichen Leistungssteigerung des Motors führt.

Weitere typische Anwendungen für durch thermisches Spritzen aufgebrachte Oberflächen ist das Beschichten von Turbinenteilen mit Verschleissschutzund Wärmedämmschichten, von Komponenten von Öl oder trocken geschmierten Lagern, wie z.B. die Beschichtung von Kurbellagern oder anderen Werkstücken, die besonderen physikalischen, chemischen oder thermischen Belastungen ausgesetzt sind. Je nach dem welchen Zweck die Schicht zu erfüllen hat, kommen ganz bestimmte Werkstoffe, in der Regel in Form von Spritzpulvern oder Spritzdrähten zum Einsatz, die die notwendigen spezifischen Eigenschaften und Zusammensetzung besitzen, um die erforderlichen Eigenschaften der zu spritzenden Oberflächenschicht zu generieren.

Ein anderes Anwendungsbeispiel ist das Vorsehen einer Reibfläche auf einem Substrat, die gerade dem umgekehrten Zweck dient und die Reibung zwischen dem Substrat und einem mit dem Substrat in Kontakt bringbaren Reibpartner in einen optimalen Bereich bringen soll, wobei gleichzeitig das Substrat selbst gegen Verschleiss bzw. Beschädigung geschützt werden soll.

So ist es z.B. bereits aus der DE 43 21 713 A1 bekannt, Bremsscheiben für Fahrzeuge mit einer thermischen Spritzschicht zu versehen, um einerseits die Bremswirkung beim Abbremsen des Fahrzeugs zu erhöhen und gleichzeitig das Substrat, also die Bremsscheibe selbst vor direktem Verschleiss zu schützen und damit nicht zuletzt die Lebensdauer der Bremsscheibe zu erhöhen.

Dabei sind in den letzten Jahren die Anforderungen an die Bremssysteme insbesondere im Automobilbau aber auch z.B. im Luftfahrtbereich ständig gestiegen. Die Bremssysteme müssen auch relativ schwere Fahrzeuge oder Flugzeuge, zudem auch von hohen Geschwindigkeit und unter widrigen Bedingungen, wie Aquaplaning, kontrolliert und zuverlässig abbremsen können. Das stellt hohe Anforderungen z.B. an die Haftzugfestigkeit der Reibbeschichtungen auf den Bremsscheiben, aber auch an physikalische Kenngrössen wie die Mikrohärte und die Makrohärte, die thermische Stabilität der Eigenschaften, die Wärmeleitfähigkeit der Reibbeläge usw. Dabei sollen die Reibschichten allein schon aus wirtschaftlichen Gründen relativ einfach und möglichst mit etablierten Methoden herstellbar sein und die für die Schichten zu verwendenden Materialien in ihrer chemischen Zusammensetzung einfach aufgebaut, aus möglichst gut verfügbaren und möglichst billigen Materialien bestehen und mit vergleichsweise geringem Aufwand herstellbar sein. Ausserdem sollen die Reibschichten gleichzeitig eine hohe Lebensdauer aufweisen, also im Betrieb möglichst wenig mechanisch verschleissen und daneben auch ausreichend resistent gegen die beim Bremsen sehr hohe Wärmeentwicklung sein und auch gegen chemische Angriffe, wie z.B. gegen Korrosion möglichst widerstandsfähig sein, so dass lange Wartungs- bzw. Erneuerungsintervalle realisierbar sind.

Die aus dem Stand der Technik bekannten Lösungen können dabei in der Regel immer nur einen bestimmten, oder höchstens einige wenige der vorgenannten Aspekte optimieren, wobei bei anderen Eigenschaften Kompromisse gemacht werden müssen.

Um diese Nachteile zumindest teilweise ausgleichen zu können, sind zum Teil recht aufwändige Beschichtungsverfahren mit komplizierten Schichtsystemen auf den Bremsscheiben vorgeschlagen worden. So wir in der DE 10 2009 008 114 A1 eine Bremsscheibe mit einer Wolframkarbid basierten Beschichtung vorgeschlagen, wobei die die mittels eines thermischen Spritzverfahrens aufgebrachte Wolframkarbid Beschichtung mittels Carborieren, Oxidieren, Gasnitrokarborieren oder einem anderen Gas- oder Plasma basierten Verfahren nachbehandelt werden muss.

Die Nachbehandlung ist dabei zwingend notwendig, um eine oberflächennahe Härtung der Reibfläche zu erzielen, indem durch das Eindiffundieren der Atome aus der Plasma- bzw. Gasphase eine verschleissfeste und korrosionsbeständig gehärtete Oberflächenschicht gebildet wird.

Dieses Verfahren ist naturgemäss sehr aufwändig, da nach dem thermischen Beschichten der Bremsscheiben noch zwingend ein Gasbehandlungsverfahren nachgeschaltet werden muss, was die Herstellung unnötig verkompliziert und teuer macht.

In der US 4822689 wird eine Beschichtung beschrieben, die durch ein thermisches Spritzverfahren auf ein Substrat aufgebracht wird. Die Schicht umfasst mehr als 60 Volumenprozent hitzebeständige Oxide und ausserdem Kobalt und / oder Nickel und / oder eine Eisenmatrix enthaltend Chrom, Aluminium und Tantal.

In der WO 97/03776 A1 wird ein Spritzpulver für thermisches Spritzen beschrieben. Die Pulverteilchen zeichnen sich durch eine vollständig legierte Metallphase aus in der eine zweite nicht-metallische Phase gleichförmig dispergiert ist.

Die Aufgabe der Erfindung ist es daher, ein thermisches Spritzpulver zum thermischen Beschichten eines Substrats bereitzustellen, mit welchem unter Verwendung an sich bekannter thermischer Spritzverfahren thermisch gespritzte Schichten hergestellt werden können, die besonders vorteilhaft als Reibschichten auf Bremsscheiben, zum Beispiel von Land- oder Luftfahrzeugen aller Art vorgesehen werden können und bei welchen dabei alle wesentlichen Anforderungsmerkmale der Schicht gleichzeitig optimiert sind. Dabei soll die Herstellung im Vergleich zum Stand der Technik wesentlich vereinfacht werden und die Zahl der notwendigen Verfahrensschritte in der Herstellung auf ein Minimum reduziert werden. Darüber hinaus ist es eine Aufgabe der Erfindung ein entsprechendes thermisch beschichtetes Substrat, insbesondere eine Bremsscheibe für ein Luft oder Landfahrzeug bereitzustellen.

Die diese Aufgaben lösenden Gegenstände der Erfindung sind durch die Merkmale der unabhängigen Ansprüche 1 und 6 gekennzeichnet.

Die jeweiligen abhängigen Ansprüche beziehen sich auf besonders vorteilhafte Ausführungsformen der Erfindung.

Die Erfindung betrifft somit ein Spritzpulver mit einer superferritischen Eisenbasisverbindung zum thermischen Beschichten eines Substrats, wobei das Spritzpulver, abgesehen von Verunreinigungen, wenigstens ein chemisches Element aus der Liste der chemischen Elementen bestehend aus C, Mn, Cr, Mo, Ni, Nb, P, S, Si, Fe, Al, O, und Zr umfasst. Erfindungsgemäss hat das Spritzpulver die folgende chemische Zusammensetzung: C höchstens bis 0.7 % Gewichtsprozent, Mn höchstens bis 0.7 % Gewichtsprozent, Ni höchstens bis 0.5 % Gewichtsprozent, Nb höchstens bis 1.2 % Gewichtsprozent, P höchstens bis 0.1 % Gewichtsprozent, S höchstens bis 0.1 % Gewichtsprozent, Si höchstens bis 0.2 % Gewichtsprozent, Cr im Bereich von 20 % bis 40 % Gewichtsprozent, Mo im Bereich 2.0 % bis 6 % Gewichtsprozent, und eine keramische Komponente Al₂O₃/ZrO₂ bis höchstens 50% Gewichtsprozent wobei der Rest Fe ist, und ansonsten insgesamt höchstens 0.4 % Gewichtsprozent weitere chemische Elemente als Verunreinigungen enthalten sind.

Dabei sind die Elemente Phosphor (P) und Schwefel (S) in besonders bevorzugten Ausführungsformen erfindungsgemässer Spritzpulver bzw. erfindungsgemässer thermischer Spritzschichten nur in so kleinen Mengen vorhanden, dass diese chemischen Elemente im Grunde ebenso wie die insgesamt höchstens 0.4% Gewichtsprozent anderen Elemente auch als Verunreinigungen angesehen werden müssen, da sie in sehr kleiner Konzentrationen, wie zum Beispiel P und S bei einer Konzentration von jeweils weniger als 0.02 Gewichtsprozent, im wesentlichen keinen Beitrag zu den positiven Eigenschaften der thermischen Spritzschichten bzw. des thermischen Spritzpulvers der Erfindung beitragen. Darüber hinaus sind diese Elemente im Prinzip auch unerwünscht, weil sie schon in verhältnismässig kleinen Konzentrationen, z.B. ab 0.1 % Gewichtsprozent oder mehr beispielweise die Ausbildung von Korngrenzen begünstigen und damit die thermischen Spritzschichten negativ beeinflussen können Es ist eine wesentliche Erkenntnis der Erfindung, dass durch die Verwendung eines superferritischen Materials, worunter man gewöhnlich nichtrostende Stähle mit ferritischem Gefüge und relativ kleinem Kohlenstoffgehalt versteht, mit einem erhöhten Chromgehalts im Spritzpulver, der erfindungsgemäss zwischen 20 % bis 40 % Gewichtsprozent Cr liegen kann, der Wärmeeintrag in das Substrat, das bevorzugt eine massive Bremsscheibe ohne Innenbelüftung aus einer AlSi Legierung mit SiC-Partiklen ist, deutlich reduziert werden kann. Dadurch kann eine Schädigung des Substratmaterials durch einen erhöhten Wärmeeintrag, wie er zum Beispiel beim starken Bremsen eines Fahrzeug zu befürchten ist, erstmals erfolgreich verhindert werden, weil durch den relativ hohen Chrom Gehalt die Wärmeleitfähigkeit der thermischen Spritzschicht im Vergleich zu den aus dem Stand der Technik bekannten Materialien deutlich reduziert ist.

Ausserdem hat sich gezeigt, dass erfindungsgemässe Schichten bei gleicher Belastung deutlich weniger bzw. langsamer verschleissen, so dass zum Beispiel die Standzeiten erfindungsgemässer Bremsscheiben im Vergleich zum Stand der Technik deutlich verbessert sind und oftmals sogar die Betriebs- bzw. Lebensdauer erreichen, so dass eine erfindungsgemässe Bremsscheibe während der gesamten Lebensdauer des Fahrzeugs überhaupt nicht mehr ausgetauscht werden müssen.

Darüber hinaus hat sich gezeigt, dass die thermischen Spritzschichten der vorliegenden Erfindung eine deutlich verbesserte Porosität von zum Beispiel kleiner als 2 % haben, wodurch die Schichten unter anderem mechanisch stabiler und belastbarer sind und eine verbesserte Härte von bis zu 700 HV0.3 oder sogar mehr haben können.

In einem bevorzugten Ausführungsbeispiel eines erfindungsgemässen Spritzpulvers hat das Spritzpulver die folgende Zusammensetzung:
C höchstens bis 0.5 %, bevorzugt höchstens bis 0.2 % Gewichtsprozent,
Mn höchstens bis 0.5 %, bevorzugt höchstens bis 0.1 % Gewichtsprozent,
Ni höchstens bis 0.3 %, bevorzugt höchstens bis 0.1 % Gewichtsprozent,
Nb höchstens bis 0.8 %, bevorzugt höchstens bis 0.6 % Gewichtsprozent
P höchstens bis 0.05 %, bevorzugt höchstens bis 0.02 %Gewichtsprozent
S höchstens bis 0.05 %, bevorzugt höchstens bis 0.01 % Gewichtsprozent
Si höchstens bis 0.15 %, bevorzugt höchstens bis 0.1 % Gewichtsprozent
Cr im Bereich von 25 % bis 35 % Gewichtsprozent,
Mo im Bereich 3.5 % bis 4.5 % Gewichtsprozent, und die keramische Komponente Al₂O₃/ZrO₂ von 10 % bis höchstens 40% Gewichtsprozent, wobei der Rest Fe ist, bis auf insgesamt höchstens 0.3 % Gewichtsprozent andere Elemente als Verunreinigungen.

In einem für die Praxis besonders wichtigen Ausführungsbeispiel ist in einem erfindungsgemässen Spritzpulver C höchstens bis 0.017 % Gewichtsprozent, Cr im Bereich von 27.5 % bis 29.5 % Gewichtsprozent, Mo im Bereich von 3.8 % bis 4.2 % Gewichtsprozent, und die keramische Komponente Al₂O₃/ZrO₂ im Bereich 34 % bis 36% , bevorzugt 35 % Gewichtsprozent vorhanden.

Dabei enthält die keramische Komponente Al₂O₃/ZrO₂ zwischen 60 % und 90 % Gewichtsprozent Al₂O₃,und zwischen 10 % und 40 % ZrO₂. In einem für die Praxis besonders wichtigen Ausführungsbeispiel enthält die keramische Komponente Al₂O₃/ZrO₂ zwischen 75 % und 85 %, bevorzugt 80 % Gewichtsprozent Al₂O₃,und zwischen 15 % und 25 %, bevorzugt 20 % ZrO₂. Das bedeutet, wenn die keramische Komponente Al₂O₃/ZrO₂ z.B. zu 35% Gewichtsprozent im Spritzpulver enthalten ist und die keramische Komponente Al₂O₃/ZrO₂ 80% Gewichtsprozent Al₂O₃ und 20 % ZrO₂ enthält, dann ist Al₂O₃ im Spritzpulver insgesamt zu 28% Gewichtsprozent enthalten und ZrO₂ ist im Spritzpulver zu insgesamt 7% im Spritzpulver enthalten.

Eine nominelle Partikelgrösse des Spritzpulvers liegt dabei bevorzugt im Bereich -16µm bis +11µm. Wobei die zuvor benutzte Nomenklatur für die Partikelgrösse in der für den Fachmann gewohnten Weise zu verstehen ist. So bedeutet wie üblich zum Beispiel eine Partikelgrösse Bereich von -16µm bis +11µm, dass die Partikel grösser als 11µm und kleiner als 16µm sind. Dabei versteht sich von selbst, dass ein erfindungsgemässen Spritzpulver auch ganz andere Partikelgrössen bzw. Partikelgrössen Verteilungen haben kann, je nach Anwendung und je nach dem welche konkreten Schichtparameter von einer damit zu spritzenden thermischen Spritzschicht gefordert sind.

Die Erfindung betrifft weiter ein Substrat mit einer thermischen Spritzschicht aus einer superferritischen Eisenbasisverbindung, wobei die thermische Spritzschicht, abgesehen von Verunreinigungen, ein chemisches Element aus der Liste der chemischen Elementen bestehend aus C, Mn, Cr, Mo, Ni, Nb, P, S, Si, Fe, Al, O, und Zr umfasst, dadurch gekennzeichnet, dass die thermische Spritzschicht die folgende chemische Zusammensetzung hat: C höchstens bis 0.7 % Gewichtsprozent, Mn höchstens bis 0.7 % Gewichtsprozent, Ni höchstens bis 0.5 % Gewichtsprozent, Nb höchstens bis 1.2 % Gewichtsprozent, P höchstens bis 0.1 % Gewichtsprozent, S höchstens bis 0.1 % Gewichtsprozent, Si höchstens bis 0.2 % Gewichtsprozent, Cr im Bereich von 20 % bis 40 % Gewichtsprozent, Mo im Bereich 2.0 % bis 6 % Gewichtsprozent, und eine keramische Komponente Al₂O₃/ZrO₂ bis höchstens 50% Gewichtsprozent, Rest Fe, wobei zusätzlich insgesamt höchstens 0.4 % Gewichtsprozent weitere chemische Elemente als Verunreinigungen enthalten sein können.

Bei einem speziellen Ausführungsbeispiel hat die thermische Spritzschicht eines erfindungsgemässen Substrats die folgende Zusammensetzung:
C höchstens bis 0.5 %, bevorzugt höchstens bis 0.2 % Gewichtsprozent,
Mn höchstens bis 0.5 %, bevorzugt höchstens bis 0.1 % Gewichtsprozent,
Ni höchstens bis 0.3 %, bevorzugt höchstens bis 0.1 % Gewichtsprozent,
Nb höchstens bis 0.8 %, bevorzugt höchstens bis 0.6 % Gewichtsprozent
P höchstens bis 0.05 %, bevorzugt höchstens bis 0.02 %Gewichtsprozent
S höchstens bis 0.05 %, bevorzugt höchstens bis 0.01 % Gewichtsprozent
Si höchstens bis 0.15 %, bevorzugt höchstens bis 0.1 % Gewichtsprozent
Cr im Bereich von 25 % bis 35 % Gewichtsprozent, Mo im Bereich 3.5 % bis 4.5 % Gewichtsprozent, und die keramische Komponente Al₂O₃/ZrO₂ von 10 % bis höchstens 40 % Gewichtsprozent, Rest Fe, wobei zusätzlich insgesamt höchstens 0.3 % Gewichtsprozent andere Elemente als Verunreinigungen enthalten sein können.

In einem für die Praxis besonders wichtigen Ausführungsbeispiel hat die thermische Spritzschicht eines erfindungsgemässen Substrats die folgende Zusammensetzung: C höchstens bis 0.017 % Gewichtsprozent, Cr im Bereich von 27.5 % bis 29.5 % Gewichtsprozent, Mo im Bereich von 3.8 % bis 4.2 % Gewichtsprozent, und die keramische Komponente Al₂O₃/ZrO₂ im Bereich 34 % bis 36% , bevorzugt 35 % Gewichtsprozent, Rest Fe.

Dabei kann die keramische Komponente Al₂O₃/ZrO₂ selbst zwischen 60 % und 90 % Gewichtsprozent Al₂O₃, und zwischen 10 % und 40 % ZrO₂ enthalten, im Speziellen kann die keramische Komponente Al₂O₃/ZrO₂ selbst zwischen 75 % und 85 %, bevorzugt 80 % Gewichtsprozent Al₂O₃, und zwischen 15 % und 25 %, bevorzugt 20 % ZrO₂ enthalten.

Die thermische Spritzschicht ist dabei in der Praxis bevorzugt eine Verbundschicht aus einer metallhaltigen Matrix mit Einlagerungen umfassend die keramische Komponente Al₂O₃/ZrO₂.

Die Porosität der thermischen Spritzschicht ist dabei kleiner als 5%, bevorzugt kleiner als 2% und / oder hat eine Mikrohärte zwischen 300 HV.03 und 1000 HV.03, bevorzugt zwischen 500 HV.03 und 700 HV.03 und / oder eine Schichtdicke der thermischen Spritzschicht liegt zwischen 50 µm und 500 µm, bevorzugt zwischen 100 µm und 300 µm liegt.

Das Substrat umfasst z.B. Aluminium, insbesondere eine Aluminiumlegierung oder ist mehr oder weniger vollständig aus Aluminium gefertigt. In der Praxis ist das ein Substrat besonders bevorzugt aus einer AlSi-Legierung mit SiC Partikeln zur Verstärkung, wobei das Substrat im Speziellen eine Bremsscheibe für ein Fahrzeug, insbesondere für ein Kraftfahrzeug oder ein Flugzeug ist.

In speziellen Fällen, wenn eine noch bessere Haftfestigkeit zwischen der superferritischen thermischen Spritzschicht und dem Substrat gefordert ist, kann zwischen der superferritischen thermischen Spritzschicht und dem Substrat eine Haftschicht, beispielweise aus Ni/Al und / oder aus Ni/Cr oder aus einem anderen an sich bekannten Haftschichtmaterial auf dem Substrat vorgesehen sein.

Die superferritsche thermische Spritzschicht und / oder die Haftschicht wird dabei bevorzugt mit einem Pulverflammspritzverfahren, insbesondere einem Hochgeschwindigkeits-Flammspritzverfahren oder einem Plasmaspritzverfahren hergestellt.

Im folgenden werden abschliessend noch Testergebnisse zu der vorliegenden Erfindung berichtet, wie sie beim Beschichten einer Bremsscheibe für ein Kraftfahrzeug erzielt wurden.

In der folgenden Tabelle 1 ist exemplarisch eine chemische Zusammensetzung der superferritischen Eisenbasisverbindung ohne die keramische Komponente für ein besonders bevorzugtes Ausführungsbeispiel eines erfindungsgemässen Spritzpulvers angegeben, dass sich in Tests auf Bremsscheiben aus einem Substrat aus einer AlSi Legierung mit SiC Partikeln hervorragend bewährt hat. Alle Prozent Angaben sind dabei Gewichtsprozent.

**Tabelle 1: Zusammensetzung der superferritischen Eisenbasisverbindung ohne die keramische Komponente. T.A.O. bezeichnet alle sonstigen Verunreinigungen.**

| C | Cr | Fe | Mn | Mo | Nb | Ni | P | S | Si | T.A.O |
|---|---|---|---|---|---|---|---|---|---|---|
| 0.017 % | 28.3 % | 66.6% | 0.1 % | 3.9 % | 0.6 | 0.1 | <0.02 | <0.01 | 0.1 | <0.3 |

Das entsprechende erfindungsgemässe Spritzpulver wurde dann dadurch gebildet, dass 35% Gewichtsprozent der insgesamt 66.6 % Gewichtsprozent des Eisens gemäss Tabelle 1 durch 35 % Gewichtsprozent der keramischen Komponente Al₂O₃/ZrO₂ ersetzt wurden, so dass das fertige Spritzpulver, das in vorgenanntem Test zur Beschichtung der Bremsscheibe verwendet wurde, nur noch 31.6 % Fe enthält und stattdessen 35 % Gewichtsprozent der keramischen Komponente Al₂O₃/ZrO₂.

Mit dem Spritzpulver, das wie weiter oben beschrieben aus der superferritischen Eisenbasisverbindung gemäss Tabelle 1 und der keramischen Komponente Al₂O₃/ZrO₂ gebildet wurde, wurden in Tests massive Bremsscheiben ohne Innenbelüftung aus einer AlSi Legierung mit SiC Partikeln beschichtet. Die Durchmesser der Bremsscheibensubstrate lagen zwischen 250 mm und 300 mm.

Die Oberfläche des Substrats wurde durch Sandstrahlen vorbehandelt, also aktiviert, wodurch auf der Substratoberfläche eine Rauheit Rₐ von ca. 4 - 8 µm erreicht wurde. Die thermische superferritische Spritzschicht gemäss der vorliegenden Erfindung wurde ohne Haftschicht direkt auf die vorbehandelte Substratoberfläche mittels atmosphärischem Plasmaspritzen aufgespritzt. Als Plasmaspritzgerät wurde ein TriplexPro-200 Brenner der Anmelderin Sulzer Metco verwendet. Als Prozessgas wurde ein Ar/He Gemisch verwendet. Die Pulverförderrate betrug 120g/min wobei Ar als Trägergas verwendet wurde. Die Auftragseffizienz des Spritzprozesses war grösser 70%. Nach dem Beschichten wurden die beschichteten Substrate in an sich bekannter Weise nachbehandelt, insbesondere geschliffen.

Mit diesen Prozessparametern konnten thermische Spritzschichten auf den Bremsscheibensubstraten erzeugt werden, die eine Porosität von weniger als 2% und eine Mikrohärte im Bereich von 500 HV.03 bis 700 HV.03 bei einer Beschichtungsdicke im geschliffenen Zustand zwischen 100 µm und 300 µm hatten.

Ähnlich gute Ergebnisse sind durch Verwendung eines Pulverflammspritzverfahrens, z.B. unter Verwendung C₂H₂/O₂ Gemischen, oder bei Verwendung eines Triplex-APS Brenners der Firma Sulzer Metco unter Verwendung von Ar/H₂ Gemischen möglich. Auch die Verwendung eines Triplex-APS mit Ar/He Gasgemischen und Förderraten bis 300g/min und mehr sind möglich. Ebenso wie die Verwendung eines Einkathoden-APS Brenners mit Ar/H₂ oder N₂/H₂ Gasgemischen.

Je nach Anwendung und Anforderungen kann zwischen einer thermischen superferritischen Spritzschicht der vorliegenden Erfindung und dem Substrat auch noch beispielweise eine Haftschicht, besonders bevorzugt aus Ni/Al oder aus NiCr auf der Substratoberfläche vorgesehen werden, wodurch die Haftung der thermischen superferritischen Spritzschicht für besondere Belastungen noch weiter verbessert werden kann. Die Haftschicht wird dabei bevorzugt ebenfalls durch einen thermischen Spritzprozess aufgebracht.

Dabei kann die Spritzschicht des erfindungsgemässen Substrats ausser den genannten technisch wesentlichen chemischen Bestandteilen auch noch die bereits bei der Beschreibung des Spritzpulvers genannten Verunreinigungen, P und S sowie noch weitere technisch unwesentliche Verunreinigungen enthalten, die exemplarisch, aber nicht abschliessend unter der Abkürzung TAO in Tabelle 1 zusammengefasst wurden.

Zusätzlich zu denjenigen Verunreinigungen, die von den entsprechenden Verunreinigungen bei der Herstellung des Spritzpulvers in der Praxis immer unvermeidlich, kann die thermische Spritzschicht eines erfindungsgemässen Substrats, abgesehen von der keramischen Komponente, in geringem Masse z.B. auch gebunden oder ungebundene Sauerstoff, für die wesentlichen Eigenschaften der Spritzschicht technisch irrelevante Mengen von Prozessgasen, wie Ar, He, N usw. enthalten, die beim thermischen Spritzvorgang, zum Beispiel durch Oxidation einer oder mehrerer Komponenten des Spritzpulver oder auf andere Weise in die Spritzschicht gelangen und dort gebunden werden können. Der Fachmann versteht, dass solche und ähnliche Verunreinigungen in der Praxis nie vollständig ausgeschlossen werden können, jedoch bei geeigneter Prozessführung derart begrenzt werden können, dass sie aus technischer Sicht die wesentlichen Eigenschaften des thermischen Spritzpulvers bzw. der damit gespritzten thermischen Spritzschicht aus praktischer Sicht nicht beeinflussen.

Daher versteht es sich auch, dass, je nachdem welches Spritzverfahren zur Erzeugung der erfindungsgemässen Spritzschicht gewählt wird, auch weitere noch nicht genannte marginale Verunreinigungen durch den Spritzvorgang selbst in die Schicht gelangen können. So ist es zum Beispiel möglich, dass bei Verwendung eines HVOF Verfahrens, bei welchem zur Erzeugung der thermischen Energie beispielsweise Kerosin oder ein anderer organischer oder anorganischer Brennstoff verbrannt werden kann, zusätzlich sehr geringe Mengen an Kohlenstoff aus dem Brennstoff in die Schicht gelangen können.

Der Fachmann versteht ohne weiteres, dass die Erfindung auch alle weiteren, nicht explizit diskutierten Kombinationen erfindungsgemässer Ausführungsbeispiele, sowie einfache Fortbildungen der Erfindung umfasst.

## Patentansprüche

1. Spritzpulver mit einer superferritischen Eisenbasisverbindung zum thermischen Beschichten eines Substrats, wobei das Spritzpulver, abgesehen von Verunreinigungen, Cr und eine keramische Komponente Al₂O₃/ZrO₂ umfasst,
**dadurch gekennzeichnet, dass**
das Spritzpulver die folgende chemische Zusammensetzung hat:
Cr im Bereich von 20 % bis 40 % Gewichtsprozent,
Mo im Bereich 2.0 % bis 6 % Gewichtsprozent,
keramische Komponente Al₂O₃/ZrO₂ bis höchstens 50% Gewichtsprozent,
Rest Fe,
wobei optional
C höchstens bis 0.7 % Gewichtsprozent,
Mn höchstens bis 0.7 % Gewichtsprozent,
Ni höchstens bis 0.5 % Gewichtsprozent,
Nb höchstens bis 1.2 % Gewichtsprozent
P höchstens bis 0.1 % Gewichtsprozent
S höchstens bis 0.1 % Gewichtsprozent
Si höchstens bis 0.2 % Gewichtsprozent
enthalten sein können und
insgesamt höchstens 0.4 % Gewichtsprozent weitere chemische Elemente als Verunreinigungen enthalten sind.

2. Spritzpulver nach Anspruch 1, wobei das Spritzpulver die folgende Zusammensetzung hat:
C höchstens bis 0.5 %, bevorzugt höchstens bis 0.2 % Gewichtsprozent,
Mn höchstens bis 0.5 %, bevorzugt höchstens bis 0.1 % Gewichtsprozent,
Ni höchstens bis 0.3 %, bevorzugt höchstens bis 0.1 % Gewichtsprozent,
Nb höchstens bis 0.8 %, bevorzugt höchstens bis 0.6 % Gewichtsprozent
P höchstens bis 0.05 %, bevorzugt höchstens bis 0.02 %Gewichtsprozent
S höchstens bis 0.05 %, bevorzugt höchstens bis 0.01 % Gewichtsprozent
Si höchstens bis 0.15 %, bevorzugt höchstens bis 0.1 % Gewichtsprozent Cr im Bereich von 25 % bis 35 % Gewichtsprozent,
Mo im Bereich 3.5 % bis 4.5 % Gewichtsprozent, und die keramische Komponente Al₂O₃/ZrO₂ von 10 % bis höchstens 40% Gewichtsprozent,
Rest Fe,
wobei insgesamt höchstens 0.3 % Gewichtsprozent weitere chemische Elemente als Verunreinigungen enthalten sind.

3. Spritzpulver nach einem der Ansprüche 1 oder 2, wobei das Spritzpulver die folgende Zusammensetzung hat:
C höchstens bis 0.017 % Gewichtsprozent,
Cr im Bereich von 27.5 % bis 29.5 % Gewichtsprozent,
Mo im Bereich von 3.8 % bis 4.2 % Gewichtsprozent, und die keramische Komponente Al₂O₃/ZrO₂ im Bereich 34 % bis 36% , bevorzugt 35 % Gewichtsprozent
Rest Fe.

4. Spritzpulver nach einem der vorangehenden Ansprüche, wobei die keramische Komponente Al₂O₃/ZrO₂ zwischen 60 % und 90 % Gewichtsprozent Al₂O₃, und zwischen 10 % und 40 % ZrO₂ enthält.

5. Spritzpulver nach einem der vorangehenden Ansprüche, wobei die keramische Komponente Al₂O₃/ZrO₂ zwischen 75 % und 85 %, bevorzugt 80 % Gewichtsprozent Al₂O₃,und zwischen 15 % und 25 %, bevorzugt 20 % ZrO₂ enthält.

6. Substrat mit einer thermischen Spritzschicht aus einer superferritischen Eisenbasisverbindung, wobei die thermische Spritzschicht, abgesehen von Verunreinigungen Cr und eine keramische Komponente Al₂O₃/ZrO₂, umfasst, **dadurch gekennzeichnet, dass**
die thermische Spritzschicht die folgende chemische Zusammensetzung hat:
Cr im Bereich von 20 % bis 40 % Gewichtsprozent,
Mo im Bereich 2.0 % bis 6 % Gewichtsprozent,
keramische Komponente Al₂O₃/ZrO₂ bis höchstens 50% Gewichtsprozent,
Rest Fe,
wobei optional
C höchstens bis 0.7 % Gewichtsprozent,
Mn höchstens bis 0.7 % Gewichtsprozent,
Ni höchstens bis 0.5 % Gewichtsprozent,
Nb höchstens bis 1.2 % Gewichtsprozent
P höchstens bis 0.1 % Gewichtsprozent
S höchstens bis 0.1 % Gewichtsprozent
Si höchstens bis 0.2 % Gewichtsprozent
enthalten sein können und
insgesamt höchstens 0.4 % Gewichtsprozent weitere chemische Elemente als Verunreinigungen enthalten sind.

7. Substrat nach Anspruch 6, wobei die thermische Spritzschicht die folgende Zusammensetzung hat:
C höchstens bis 0.5 %, bevorzugt höchstens bis 0.2 % Gewichtsprozent,
Mn höchstens bis 0.5 %, bevorzugt höchstens bis 0.1 % Gewichtsprozent,
Ni höchstens bis 0.3 %, bevorzugt höchstens bis 0.1 % Gewichtsprozent,
Nb höchstens bis 0.8 %, bevorzugt höchstens bis 0.6 % Gewichtsprozent
P höchstens bis 0.05 %, bevorzugt höchstens bis 0.02 %Gewichtsprozent
S höchstens bis 0.05 %, bevorzugt höchstens bis 0.01 % Gewichtsprozent
Si höchstens bis 0.15 %, bevorzugt höchstens bis 0.1 % Gewichtsprozent
Cr im Bereich von 25 % bis 35 % Gewichtsprozent,
Mo im Bereich 3.5 % bis 4.5 % Gewichtsprozent, und die keramische Komponente Al₂O₃/ZrO₂ von 10 % bis höchstens 40 % Gewichtsprozent,
Rest Fe,
wobei insgesamt höchstens 0.3 % Gewichtsprozent weitere chemische Elemente als Verunreinigungen enthalten sind.

8. Substrat nach einem der Ansprüche 6 oder 7, wobei die thermische Spritzschicht die folgende Zusammensetzung hat:
C höchstens bis 0.017 % Gewichtsprozent,
Cr im Bereich von 27.5 % bis 29.5 % Gewichtsprozent,
Mo im Bereich von 3.8 % bis 4.2 % Gewichtsprozent, und die keramische Komponente Al₂O₃/ZrO₂ im Bereich 34 % bis 36%, bevorzugt 35 % Gewichtsprozent
Rest Fe.

9. Substrat nach einem der Ansprüche 6 bis 8, wobei die keramische Komponente Al₂O₃/ZrO₂ zwischen 60 % und 90 % Gewichtsprozent Al₂O₃,und zwischen 10 % und 40 % ZrO₂ enthält.

10. Substrat nach einem der Ansprüche 6 bis 9, wobei die keramische Komponente Al₂O₃/ZrO₂ zwischen 75 % und 85 %, bevorzugt 80 % Gewichtsprozent Al₂O₃, und zwischen 15 % und 25 %, bevorzugt 20 % ZrO₂ enthält.

11. Substrat nach einem der Ansprüche 6 bis 10, wobei die thermische Spritzschicht eine Verbundschicht aus einer metallhaltigen Matrix mit Einlagerungen umfassend die keramische Komponente Al₂O₃/ZrO₂ ist.

12. Substrat nach einem der Ansprüche 6 bis 11, wobei eine Porosität der thermischen Spritzschicht kleiner als 5% ist, bevorzugt kleiner als 2% Ist und / oder eine Mikrohärte der thermischen Spritzschicht zwischen 300 HV.03 und 1000 HV.03, bevorzugt zwischen 500 HV.03 und 700 HV.03 liegt und / oder wobei eine Schichtdicke der thermischen Spritzschicht zwischen 50 µm und 500 µm, bevorzugt zwischen 100 µm und 300 µm liegt.

13. Substrat nach einem der Ansprüche 6 bis 12, wobei das Substrat Aluminium umfasst, insbesondere aus einer Aluminiumlegierung oder aus Aluminium ist und / oder wobei das Substrat eine Bremsscheibe für ein Fahrzeug, insbesondere für ein Kraftfahrzeug ist.

14. Substrat nach einem der Ansprüche 6 bis 13, wobei zwischen der thermischen Spritzschicht und dem Substrat eine Haftschicht aus Ni/Al und / oder aus Ni/Cr auf dem Substrat vorgesehen ist.

15. Substrat nach einem der Ansprüche 6 bis 14, wobei die thermische Spritzschicht und / oder die Haftschicht mit einem Pulverflammspritzverfahren, insbesondere einem Hochgeschwindigkeits-Flammspritzverfahren oder einem Plasmaspritzverfahren hergestellt ist.

## Claims

1. A spray powder with a superferritic iron-based compound for the thermal coating of a substrate, wherein the spray powder includes, apart from impurities, Cr and a ceramic component Al₂O₃/ZrO₂, **characterized in that** the spray powder has the following chemical composition:
Cr in the range from 20% to 40% by weight,
Mo in the range 2.0% to 6% by weight,
ceramic component Al₂O₃/ZrO₂ up to a maximum of 50% by weight,
remainder Fe,
wherein optional
C at a maximum up to 0.7% by weight,
Mn at a maximum up to 0.7% by weight,
Ni at a maximum up to 0.5% by weight,
Nb at a maximum up to 1.2% by weight
P at a maximum up to 0.1 % by weight
S at a maximum up to 0.1 % by weight
Si at a maximum up to 0.2% by weight
can be contained and
a total of a maximum of 0.4% by weight of further chemical elements are contained as impurities.

2. A spray powder in accordance with claim 1, wherein the spray powder has the following composition:
C at a maximum up to 0.5%, preferably at a maximum up to 0.2% by weight,
Mn at a maximum up to 0.5%, preferably at a maximum up to 0.1 % by weight,
Ni at a maximum up to 0.3%, preferably at a maximum up to 0.1 % by weight,
Nb at a maximum up to 0.8%, preferably at a maximum up to 0.6% by weight
P at a maximum up to 0.05%, preferably at a maximum up to 0.02% by weight,
S at a maximum up to 0.05%, preferably at a maximum up to 0.01 % by weight,
Si at a maximum up to 0.15%, preferably at a maximum up to 0.1 % by weight,
Cr in the range from 25% to 35% by weight,
Mo in the range 3.5% to 4.5% by weight, and
the ceramic component Al₂O₃/ZrO₂ from 10% up to a maximum of 40% by weight.
remainder Fe,
wherein a total of a maximum of 0.3% by weight of further chemical elements are contained as impurities.

3. A spray powder in accordance with one of the claims 1 or 2, wherein the spray powder has the following composition:
C at a maximum up to 0.017% by weight,
Cr in the range from 27.5% to 29.5% by weight,
Mo in the range 3.8% to 4.2% by weight, and the ceramic component Al₂O₃/ZrO₂ in the range 34% to 36%, preferably 35%, by weight,
remainder Fe.

4. A spray powder in accordance with any one of the preceding claims, wherein the ceramic component Al₂O₃/ZrO₂ contains between 60% and 90% by weight Al₂O₃ and between 10% and 40% by weight ZrO₂.

5. A spray powder in accordance with any one of the preceding claims, wherein the ceramic component Al₂O₃/ZrO₂ contains between 75% and 85%, preferably 80%, by weight AL₂O₃ and between 15% and 25%, preferably 20%, by weight ZrO₂.

6. A substrate with a thermal spray layer made from a superferritic iron-based compound, wherein the thermal spray layer includes, apart from impurities, Cr and a ceramic component Al₂O₃/ZrO₂, **characterized in that** the thermal spray layer has the following chemical composition:
Cr in the range from 20% to 40% by weight,
Mo in the range 2.0% to 6% by weight,
ceramic component Al₂O₃/ZrO₂ up to a maximum of 50% by weight,
remainder Fe,
wherein optional
C at a maximum up to 0.7% by weight,
Mn at a maximum up to 0.7% by weight,
Ni at a maximum up to 0.5% by weight,
Nb at a maximum up to 1.2% by weight
P at a maximum up to 0.1 % by weight
S at a maximum up to 0.1 % by weight
Si at a maximum up to 0.2% by weight
can be contained and
a total of a maximum of 0.4% by weight of further chemical elements are contained as impurities.

7. A substrate in accordance with claim 6, wherein the thermal spray layer has the following composition:
C at a maximum up to 0.5%, preferably at a maximum up to 0.2% by weight,
Mn at a maximum up to 0.5%, preferably at a maximum up to 0.1 % by weight,
Ni at a maximum up to 0.3%, preferably at a maximum up to 0.1 % by weight,
Nb at a maximum up to 0.8%, preferably at a maximum up to 0.6% by weight
P at a maximum up to 0.05%, preferably at a maximum up to 0.02% by weight,
S at a maximum up to 0.05%, preferably at a maximum up to 0.01 % by weight,
Si at a maximum up to 0.15%, preferably at a maximum up to 0.1 % by weight,
Cr in the range from 25% to 35% by weight,
Mo in the range 3.5% to 4.5% by weight, and
the ceramic component Al₂O₃/ZrO₂ from 10% up to a maximum of 40% by weight,
remainder Fe,
wherein a total of a maximum of 0.3% by weight of further chemical elements are contained as impurities.

8. A substrate in accordance with one of the claims 6 or 7, wherein the thermal spray layer has the following composition:
C at a maximum up to 0.017% by weight,
Cr in the range from 27.5% to 29.5% by weight,
Mo in the range from 3.8% to 4.2% by weight, and the ceramic component Al₂O₃/ZrO₂ in the range 34% to 36%, preferably 35%, by weight,
remainder Fe.

9. A substrate in accordance with any one of the claims 6 to 8, wherein the ceramic component Al₂O₃/ZrO₂ contains between 60% and 90% by weight Al₂O₃ and between 10% and 40% by weight ZrO₂.

10. A substrate in accordance with any one of the claims 6 to 9, wherein the ceramic component Al₂O₃/ZrO₂ contains between 75% and 85%, preferably 80%, by weight AL₂O₃ and between 15% and 25%, preferably 20%, by weight ZrO₂.

11. A substrate in accordance with any one of the claims 6 to 10, wherein the thermal spray layer is a compound layer of a matrix containing metal and having inclusions including the ceramic component Al₂O₃/ZrO₂.

12. A substrate in accordance with any one of the claims 6 to 11, wherein a porosity of the thermal spay layer is less than 5%, preferably less than 2%, and/or a microhardness of the thermal spray layer is between 300 HV.03 and 1000 HV.03, preferably between 500 HV0.3 and 700 HV0.3 and/or wherein a layer thickness of the thermal spray layer is between 50 µm and 500 µm, preferably between 100 µm and 300 µm.

13. A substrate in accordance with any one of the claims 6 to 12, wherein the substrate includes aluminum, is in particular made from an aluminum alloy or of aluminum, and/or wherein the substrate is a brake disk for a vehicle, in particular for a motor vehicle.

14. A substrate in accordance with any one of the claims 6 to 13, wherein an adhesive layer made from Ni/Al and/or from Ni/Cr is provided on the substrate between the thermal spray layer and the substrate.

15. A substrate in accordance with any one of the claims 6 to 14, wherein the thermal spray layer and/or the adhesive layer is manufactured using a powder flame spraying process, in particular a high-velocity powder flame spraying process or a plasma spraying process.

## Revendications

1. Poudre pour pulvérisation avec un composé à base de fer superferritique pour le revêtement thermique d'un substrat, la poudre pour pulvérisation contenant Cr et une composante céramique Al₂O₃/ZrO₂, en négligeant les impuretés,
**caractérisée en ce que**
la poudre pour pulvérisation a la composition chimique suivante :
Cr dans la plage de 20 % à 40 % en pour cent-poids,
Mo dans la plage de 2,0 % à 6 % en pour cent-poids,
composante céramique Al₂O₃/ZrO₂ jusqu'à 50 % pour cent-poids au maximum,
reste Fe,
où, en option,
C au maximum jusqu'à 0,7 % en pour cent-poids,
Mn au maximum jusqu'à 0,7 % en pour cent-poids,
Ni au maximum jusqu'à 0,5 % en pour cent-poids,
Nb au maximum jusqu'à 1,2 % en pour cent-poids,
P au maximum jusqu'à 0,1 % en pour cent-poids,
S au maximum jusqu'à 0,1 % en pour cent-poids,
Si au maximum jusqu'à 0,2 % en pour cent-poids peuvent être contenus en option, et
au total au maximum 0,4 % en pour cent-poids d'autres éléments chimiques peut être contenu en tant qu'impuretés.

2. Poudre pour pulvérisation selon la revendication 1, la poudre pour pulvérisation ayant la composition suivante :
C au maximum jusqu'à 0,5 %, de préférence au maximum jusqu'à 0,2 % en pour cent-poids,
Mn au maximum jusqu'à 0,5 %, de préférence au maximum jusqu'à 0,1 % en pour cent-poids,
Ni au maximum jusqu'à 0,3 %, de préférence au maximum jusqu'à 0,1 % en pour cent-poids,
Nb au maximum jusqu'à 0,8 %, de préférence au maximum jusqu'à 0,6 % en pour cent-poids,
P au maximum jusqu'à 0,05 %, de préférence au maximum jusqu'à 0,02 % en pour cent-poids,
S au maximum jusqu'à 0,05 %, de préférence au maximum jusqu'à 0,01 % en pour cent-poids,
Si au maximum jusqu'à 0,15 %, de préférence au maximum jusqu'à 0,1 % en pour cent-poids,
Cr dans la plage de 25 % à 35 % en pour cent-poids,
Mo dans la plage de 3,5 % à 4,5 % en pour cent-poids, et la
composante céramique Al₂O₃/ZrO₂ de 10 % à au maximum 40 % en pour cent-poids,
reste Fe,
au total au maximum 0,3 % en pour cent-poids d'autres éléments chimiques étant contenu en tant qu'impuretés.

3. Poudre pour pulvérisation selon une des revendications 1 ou 2, la poudre pour pulvérisation ayant la composition suivante :
C au maximum jusqu'à 0,017 en pour cent-poids,
Cr dans la plage de 27,5 % à 29,5 % en pour cent-poids,
Mo dans la plage de 3,8 % à 4,2 % en pour cent-poids, et la
composante céramique Al₂O₃/ZrO₂ dans la plage de 34% à 36 %, de préférence 35% en pour cent-poids
reste Fe.

4. Poudre pour pulvérisation selon une des revendications précédentes,
la composante céramique Al₂O₃/ZrO₂ contenant entre 60 % et 90 % en pour cent-poids de Al₂O₃ et entre 10 % et 40 % de ZrO₂.

5. Poudre pour pulvérisation selon une des revendications précédentes,
la composante céramique Al₂O₃/ZrO₂ contenant entre 75 % et 85 %, de préférence 80 % en pour cent-poids de Al₂O₃, et entre 15 % et 25 %, de préférence 20 % de ZrO₂.

6. Substrat avec une couche de pulvérisation thermique réalisée à partir d'un composé à base de fer superferritique, la couche de pulvérisation thermique comprenant Cr et une composante céramique Al₂O₃/ZrO₂, en négligeant les impuretés, **caractérisé en ce que**
la couche de pulvérisation thermique a la composition chimique suivante :
Cr dans la plage de 20 % à 40 % en pour cent-poids,
Mo dans la plage de 2,0 % à 6 % en pour cent-poids,
composante céramique Al₂O₃/ZrO₂ jusqu'à au maximum 50 % en pour cent-poids,
reste Fe,
où, en option,
C au maximum jusqu'à 0,7 % en pour cent-poids,
Mn au maximum jusqu'à 0,7 % en pour cent-poids,
Ni au maximum jusqu'à 0,5 % en pour cent-poids,
Nb au maximum jusqu'à 1,2 % en pour cent-poids,
P au maximum jusqu'à 0,1 % en pour cent-poids,
S au maximum jusqu'à 0,1 % en pour cent-poids,
Si au maximum jusqu'à 0,2 % en pour cent-poids,
peuvent être contenus, et
au total au maximum 0,4 % en pour cent-poids d'autres éléments chimiques est contenu en tant qu'impuretés.

7. Substrat selon la revendication 6, la couche de pulvérisation thermique ayant la composition suivante :
C au maximum jusqu'à 0,5 %, de préférence au maximum jusqu'à 0,2 % en pour cent-poids,
Mn au maximum jusqu'à 0,5 %, de préférence au maximum jusqu'à 0,1 % en pour cent-poids,
Ni au maximum jusqu'à 0,3 %, de préférence au maximum jusqu'à 0,1 % en pour cent-poids,
Nb au maximum jusqu'à 0,8 %, de préférence au maximum jusqu'à 0,6 % en pour cent-poids,
P au maximum jusqu'à 0,05 %, de préférence au maximum jusqu'à 0,02 % en pour cent-poids,
S au maximum jusqu'à 0,05 %, de préférence au maximum jusqu'à 0,01 % en pour cent-poids,
Si au maximum jusqu'à 0,15 %, de préférence au maximum jusqu'à 0,1 % en pour cent-poids,
Cr dans la plage de 25 % à 35 % en pour cent-poids,
Mo dans la plage de 3,5 % à 4,5 % en pour cent-poids, et la
composante céramique Al₂O₃/ZrO₂ de 10 % à au maximum 40 % en pour cent-poids,
reste Fe,
au total au maximum 0,3 % en pour cent-poids d'autres éléments chimiques étant contenu en tant qu'impuretés.

8. Substrat selon une des revendications 6 ou 7, la couche de pulvérisation thermique ayant la composition suivante :
C au maximum jusqu'à 0,017 % en pour cent-poids,
Cr dans la plage de 27,5 % à 29,5 % en pour cent-poids
Mo dans la plage de 3,8 % à 4,2 % en pour cent-poids, et la
composante céramique Al₂O₃/ZrO₂ dans la plage de 34 % à 36 %, de préférence 35 % en pour cent-poids,
reste Fe.

9. Substrat selon une des revendications 6 à 8,
la composante céramique Al₂O₃/ZrO₂ contenant entre 60 % et 90 % en pour cent-poids de Al₂O₃ et entre 10% et 40 % de ZrO₂.

10. Substrat selon une des revendications 6 à 9,
la composante céramique Al₂O₃/ZrO₂ contenant entre 75 % et 85 %, de préférence 80 % en pour cent-poids de Al₂O₃, et entre 15 % et 25 %, de préférence 20 % de ZrO₂.

11. Substrat selon une des revendications 6 à 10, la couche de pulvérisation thermique étant une couche composite réalisée à partir d'une matrice contenant du métal avec des inclusions comprenant la composante céramique Al₂O₃/ZrO₂.

12. Substrat selon une des revendications 6 à 11, une porosité de la couche de pulvérisation thermique étant inférieure à 5 %, de préférence inférieure à 2%, et/ou une microdureté de la couche de pulvérisation thermique étant comprise entre 300 HV.03 et 1 000 HV.03, de préférence entre 500 HV.03 et 700 HV.03, et/ou une épaisseur de couche de la couche de pulvérisation thermique étant comprise entre 50 µm et 500 µm, de préférence entre 100 µm et 300 µm.

13. Substrat selon une des revendications 6 à 12, le substrat comprenant de l'aluminium étant en particulier réalisé à partir d'alliage d'aluminium ou d'aluminium, et/ou le substrat étant un disque de frein pour un véhicule, en particulier pour un véhicule automobile.

14. Substrat selon une des revendications 6 à 13, une couche adhésive en Ni/Al et/ou en Ni/Cr étant prévue sur le substrat entre la couche de pulvérisation thermique et le substrat.

15. Substrat selon une des revendications 6 à 14, la couche de pulvérisation thermique et/ou la couche adhésive étant fabriquée avec un procédé de projection flamme-poudre, en particulier un procédé de projection à la flamme à grande vitesse ou un procédé de projection plasma.
